(19) Europäisches Patentamt
European Patent Office
Office européen des brevets

(11) **EP 1 770 706 A2**

## (12) EUROPEAN PATENT APPLICATION

(43) Date of publication:
**04.04.2007 Bulletin 2007/14**

(51) Int Cl.:
*G11B 27/10* (2006.01)    *G11B 27/32* (2006.01)
*G11B 27/034* (2006.01)    *H04L 12/56* (2006.01)

(21) Application number: **06019942.9**

(22) Date of filing: **22.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.09.2005 JP 2005282996**

(71) Applicant: **SONY CORPORATION**
**Tokyo (JP)**

(72) Inventor: **Matsubara, Kazuo**
**c/o Sony Corporation**
**Shinagawa-ku**
**Tokyo (JP)**

(74) Representative: **Müller - Hoffmann & Partner Patentanwälte,**
**Innere Wiener Strasse 17**
**81667 München (DE)**

(54) **Preference information processing system, recording apparatus, information processing apparatus and communication method**

(57)    A plurality of information processing apparatus can share preference information that each of the apparatus has. There is provided a preference information processing system which has a plurality of information processing apparatus adapted to share preference information acquired on the basis of user operations for contents on a recording apparatus communicable with each of the information processing apparatus, wherein each of the plurality of information processing apparatus includes a user operation managing section that manages user operations for the contents, an attribute information managing section that manages attribute information of the contents, an action managing section that manages actions for the contents, and a general control section that controls these managing sections, and communicates with the recording apparatus, and the recording apparatus contains a preference information database and a preference information control section that manages/edits preference information, which are shared by the plurality of information processing apparatus.

1 Preference information processing section

FIG.4

EP 1 770 706 A2

**Description**

CROSS REFERENCES TO RELATED APPLICATIONS

The present invention contains subject matter related to Japanese Patent Application JP 2005-282996 filed in the Japanese Patent Office on September 28, 2005, the entire contents of which being incorporated herein by reference.

BACKGROUND OF THE INVENTION

1. Field of the Invention

The present invention relates to a preference information processing system having a plurality of information processing apparatus adapted to share preference information acquired on the basis of user operations for contents on a recording apparatus communicable with each of the information processing apparatus. The present invention also relates to a recording apparatus communicable with a plurality of information processing apparatus and sharing preference information that is based on the operations performed by users for contents at the plurality of information processing apparatus. The present invention also relates to an information processing apparatus communicable with a recording apparatus containing a preference information control section for managing/editing preference information that is based on the operations performed by users for contents and a preference information database controlled by the preference information control section. The present invention also relates to a communication method to be used in a preference information processing system having a plurality of information processing apparatus adapted to share preference information acquired on the basis of user operations for contents on a recording apparatus communicable with each of the information processing apparatus.

2. Description of the Related Art

Available frequency bands are assigned to broadcasting stations that provide broadcasting services including analog or digital terrestrial and satellite broadcasting services in advance and each broadcasting station broadcasts program data of its own by way of the frequency bands assigned to it. The receiving set installed in the house of a viewer/listener (to be referred to as IRD (integrated receiver decoder) hereinafter) selects the program data from the desired broadcasting station in response to an operation by the user/viewer/listener, which may typically a tuning in operation, decodes the selected program data from the broadcasting station and displays the program on an external monitor. If the IRD is connected to an HDD (hard disc drive), the program data are recorded in the HDD.

In a broadcasting system as described above, a specific broadcasting station typically periodically delivers electronic program guide (to be referred to as EPG hereinafter) data summarily showing the contents of the programs provided by the broadcasting stations of the system for the purpose of notifying viewers of the programs. EPG data include program titles, times and dates of broadcasting of programs, broadcasting channels, descriptions of programs, performers and so on so that the audience can consult EPG data when selecting one or more than one programs to be viewed and/or recorded.

In this case, the IRD receives the EPG data periodically transmitted from the broadcasting station to store the data in a memory, and reads the EPG data from the memory in accordance with a display operation of the viewer/listener to display the data on the external monitor. Thus, the viewer/listener can visually check the EPG data displayed on the monitor and determine a program to be viewed.

While EPG data contain information on a vast number of programs, the display screen of the monitor for displaying the EPG data is limited so that only information on part of the vast number of programs can be displayed on the display screen of the monitor. Therefore, the viewer/listener has to scroll the image being displayed on the display screen in order to retrieve the desired program from the vast number of programs. Such a retrieving operation may be cumbersome to the viewer/listener.

A technique has been proposed to avoid such cumbersome retrieving operations. With the proposed technique, the user inputs a keyword for retrieving the desired program out of the vast number of programs contained in EPG data and the program is retrieved by means of the input keyword. Then, the results of the retrieving operation are displayed on the display screen.

However, with the proposed technique, the user has to input the keyword typically by way of a keyboard and hence the effect of reducing the amount of operation necessary to retrieve the desired program is not satisfactory. Additionally, since the program retrieving operation is based only a keyword, there are occasions where programs that are not liking of the user are retrieved.

Patent Document 1 (WO01/043429) discloses an information retrieving apparatus that stores use history information of a recording medium for recording pieces of information that are acquired as a result of using the recording medium in a storage means and information that matches the liking of the user is retrieved from the plurality of pieces of information stored in the storage means according to the use history information. With this arrangement, programs that match the liking of the user can be retrieved with ease without making the user input any key information, which may otherwise be necessary for retrieving information, so that the amount of operation for retrieving information is dramatically reduced.

Patent Document 2 (Jpn. Pat. Appln. Laid-Open Publication No. 2004-72502) discloses an automatic recording apparatus and an automatic recording method for automatically recording contents that match the liking of the user according to various operations performed by the user for his or her favorite contents regardless if the liking of the user is complex and diverse. The disclosed automatic contents recording apparatus includes an operation history managing means for preparing history information on the operations relating to liking for contents that are performed by the user by using a preference value parameter of the operation of each of the different types on the basis of the operations of a plurality of different types relating to liking for contents and descriptive information on the contents for which the operations are performed, a preference information managing means for preparing and updating preference information including preference values of a plurality of elements relating to liking for contents by using the coefficient parameter of each of the plurality of elements based on the history information and a contents recommendation means for computationally determining the degree of liking for each set of contents according to the preference information and the descriptive information on the contents and making reservations for sets of contents according to the degrees of liking so as to record the sets of contents for which reservations are made.

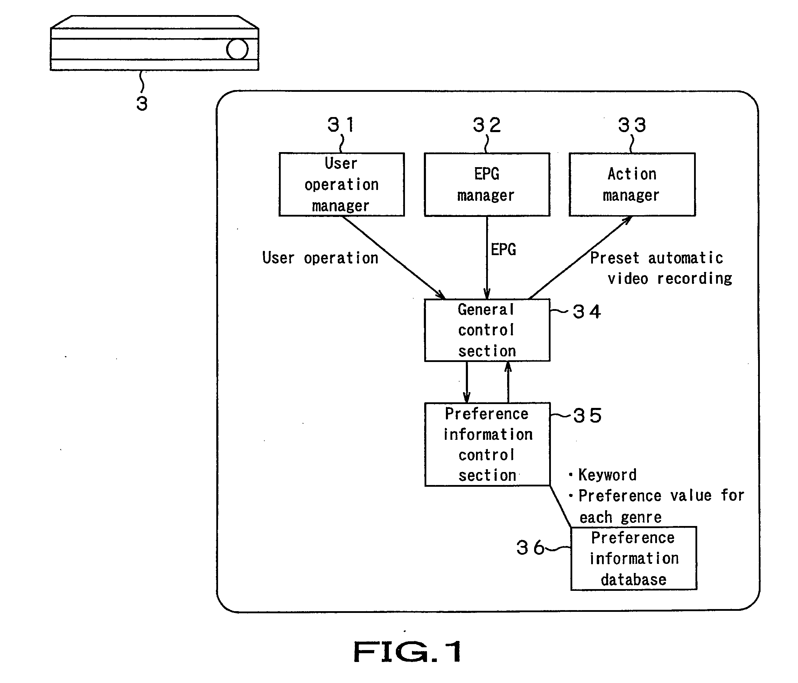

As the related art, information processing apparatus 3 including a user operation manager (managing section) 31, an EPG manager 32, an action manager 33, a general control section 34, a preference information control section 35 and a preference information database 36 as shown in FIG. 1 of the accompanying drawings are known. Particularly, HDD recording apparatus containing an HDD for recording video information and audio information have become popular. Such an HDD recording apparatus 3 is adapted to be connected to a television receiving set so as to reproduce the video information recorded in an HDD and display the recorded programs for the user for viewing.

The user operation manager 31 of the HDD recording apparatus 3 manages the user operations performed by means of the operation panel or the remote control unit of the apparatus and delivers information on the user operations relating to liking for programs to the general control section 34.

The EPG manager 32 extracts the EPGs that are delivered periodically from a specific broadcasting station by means of an electric wave from the electric wave and sends them to the general control section 34.

The general control section 34 generates a message for the preference values that relate to the EPGs for which the user operations are performed, using the information on the user operation from the user operation manager 31 and the EPG information from the EPG manager and sends it to the preference information control section 35.

The preference information control section 35 prepares and updates preference information typically including preference values of the elements relating to liking for contents (title keywords, keywords, genres, broadcasting time zones) contained in the EPG information by referring to the preference information database 36, according to the message for the preference values generated by the general control section 34.

The general control section 34 has the action manager 33 take actions for preset automatic video recording, downloading, retrieving shopping information, retrieving positional information and so on according to the preference values on the basis of the preference information prepared by the preference information control section 35 and EPG information on program to be broadcast in the future.

The action manager 33 actually presets the HDD contained in the apparatus for automatic video recording of programs under the control of the general control section 34. In other words, presetting for automatic video recording of programs is controlled by the general control section 34. The action manager also takes actions for downloading, retrieving shopping information, retrieving positional information and so on.

Meanwhile, apart from HDD recording apparatus to be connected to broadcasting systems in order to display reproduced images on television receiving sets, currently available information processing apparatus adapted to be connected to network systems such as the Internet in order to externally acquire contents include audio recording apparatus adapted to be connected to networks, personal computers, portable telephone sets, and portable terminal apparatus (PDAs).

Audio recording apparatus adapted to be connected to networks can download music information from predetermined servers to the HDD contained therein or a recording medium such as MD by way of the Internet. Personal computers can acquire video information such as movies, audio information and information for purchasing books of various types, CDs and DVDs by way of the Internet and record the acquired information in the HDD or the DVD contained therein. Portable telephone sets and PDAs can acquire video information, music information and the positional information of the user who owns such a set also by way of a wireless network.

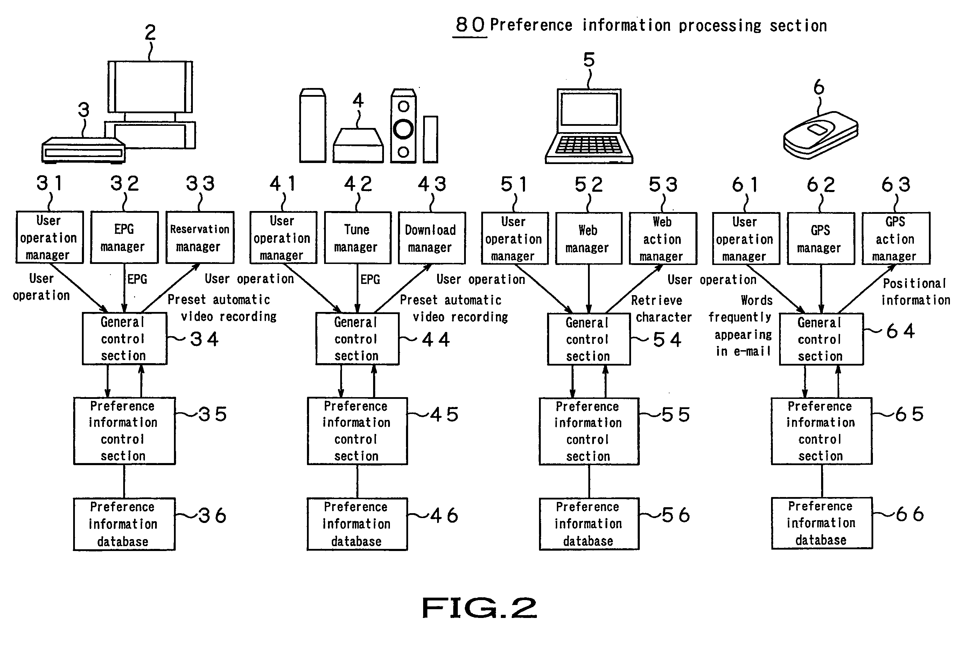

With any of these information processing apparatus, by applying the Patent Documents 1 and 2, it is possible to realize the functional features of the apparatus illustrated in FIG. 1 without difficulty. FIG. 2 schematically illustrates a system for using preference information of information processing apparatus of various different types (including an HDD recording apparatus 3, an audio recording apparatus 4, a personal computer 5 and a portable telephone set 6). Referring to FIG. 2, the HDD recording apparatus 3 has functional units of a user operation manager (managing section) 31, an EPG manager 32, a reservation manager 33 that operates as an action manager, a general control section 34, a preference information control section 35 and a preference information database 36, which are described above. The audio recording apparatus 4 has functional units of a user operation manager 41, a tune manager 42, a download manager 43, a general control section 44, a preference information control section 45 and a preference information database 46. The personal computer 5 has functional units of a user operation manager 51, a web manager 52, a web action manager 53, a general control section 54, a preference information control section 55 and a preference information database 56. The portable telephone set 6 has functional units of a user operation manager 61, a GPS manager 62, a GPS action manager 63, a general control section 64, a preference information control section 65 and a preference information database 66.

SUMMARY OF THE INVENTION

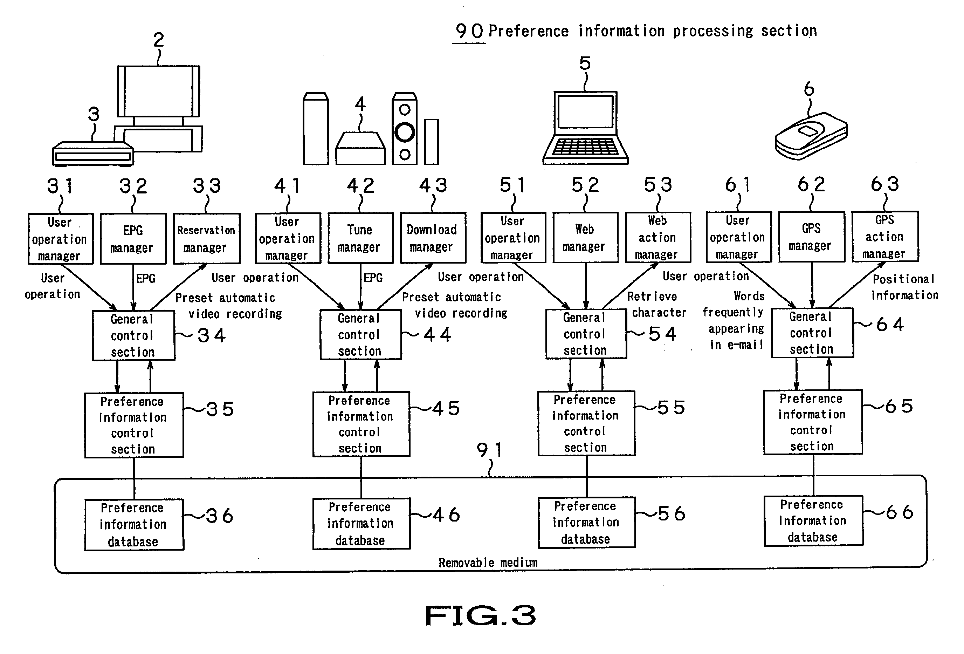

However, it is difficult for the above-described information processing apparatus to share the preference information of any of them. For instance, it is easy for an information processing apparatus 90 as schematically illustrated in FIG. 3 to write the contents of the preference information databases 36, 46, 56 and 66 in a removable medium (e.g., flash memory) 91 but the preference information control sections 35, 45, 55 and 65 are specific to the respective apparatus 3, 4, 5 and 6 and the preference information databases 36, 46, 56 and 66 have respective formats that are different from each other so that it is very difficult to utilize the contents of the preference information databases 36, 46, 56 and 66 stored in the flash memory 91.

In view of the above-identified circumstances of the related art, it is therefore desirable to provide a preference information processing system, a recording apparatus, an information processing apparatus and a communication method that make it possible to share the preference information of each of such apparatus.

According to an embodiment of the present invention, there is provided a preference information processing system which has a plurality of information processing apparatus adapted to share preference information acquired on the basis of user operations for contents on a recording apparatus communicable with each of the information processing apparatus, wherein each of the plurality of information processing apparatus includes a user operation managing section that manages user operations for the contents, an attribute information managing section that manages attribute information of the contents, an action managing section that manages actions for the contents, and a general control section that controls the user operation managing section, the attribute information managing section and the action managing section, and communicates with the recording apparatus, and the recording apparatus contains a preference information database and a preference information control section that manages/edits preference information, which are shared by the plurality of information processing apparatus.

Since the recording apparatus contains a preference information database and a preference information control section that manages and edits preference information and is communicable with each of the variety of information processing apparatus, the general control section of each of the information processing apparatus can communicate with the preference information control section and manage actions on the basis of preference information.

According to another embodiment of the present invention, there is also provided a recording apparatus communicable with a plurality of information processing apparatus and adapted to share preference information acquired on the basis of user operations for contents in the plurality of information processing apparatus, which contains a preference information database and a preference information control section that manages/edits preference information, which are shared by the plurality of information processing apparatus.

According to another embodiment of the present invention, there is also provided an information processing apparatus communicable with a recording apparatus containing a preference information control section for managing/editing preference information acquired on the basis of user operations for contents and a preference information database controlled by the preference information control section, which includes a user operation managing section that manages user operations for the contents, an attribute information managing section that manages attribute information of the contents, an action managing section that manages actions for the contents, and a general control section that controls the user operation managing section, the attribute information managing section and the action managing section, and communicates with the recording apparatus.

Since the recording apparatus contains a preference information database and a preference information control section that manages/edits preference information and is adapted to be mounted in a variety of information processing apparatus, the general control section in each of the information processing apparatus can communicate with the preference information control section and manage actions on the basis of preference information.

Thus, according to the present invention, it is possible for a variety of information processing apparatus to share the preference information each of the apparatus has. In other words, it is possible for a plurality of information processing apparatus to share preference information by means of a recording apparatus. Then, as a result, it is possible to acquire information (preference information of the user) that a single information processing apparatus is not able to hitherto acquire and recommend contents preferable for the user.

When a recording apparatus is used by single information processing apparatus, the information processing apparatus provides an advantage of reducing the cost of being equipped with a preference information control section.

Additionally, the user can save the effort of inputting favorite keywords for a number of times at a number of apparatus. Furthermore, the user can suppress the risk that all of his or her preference information flows out to information processing apparatus.

BRIEF DESCRIPTION OF THE DRAWINGS

FIG. 1 is a schematic functional block diagram of a known information processing apparatus;
FIG. 2 is a schematic functional block diagram of a known preference information processing system;
FIG. 3 is a schematic functional block diagram of a known preference information processing system;
FIG. 4 is a schematic functional block diagram of a preference information processing system according to an embodiment of the present invention;
FIG. 5 is a schematic functional block diagram of another preference information processing system;
FIG. 6 is a schematic illustration of the function of the internal configuration of an HDD recording apparatus;
FIG. 7 is a schematic illustration of the format of a database;
FIG. 8 is a schematic illustration of the data structure of medium-dependent preference information conforming to a medium-dependent database format;
FIG. 9 is a schematic illustration of data packets of three different types that flows among information processing apparatus and a removable medium;
FIG. 10 is a schematic illustration of the format of inquiry packets of a message protocol;
FIG. 11 is a schematic illustration of the format of answer packets of a message protocol;
FIG. 12 is a schematic illustration of the format of study info packets of a message protocol;
FIG. 13 is a schematic illustration of the method of altering a medium-dependent preference value;
FIG. 14 is a schematic illustration of the method of altering a basic preference value;
FIG. 15 is a schematic illustration of the hardware configuration of an HDD recording apparatus;
FIG. 16 is a schematic illustration of an exemplary removable medium;
FIG. 17 is a schematic illustration of another preference information processing system; and
FIG. 18 is a schematic block diagram of the preference information processing system of FIG. 17.

DETAILED DESCRIPTION OF THE PREFERRED EMBODIMENTS

Now, the present invention will be described in greater detail by referring to the accompanying drawings that illustrate preferred embodiments of the present invention.

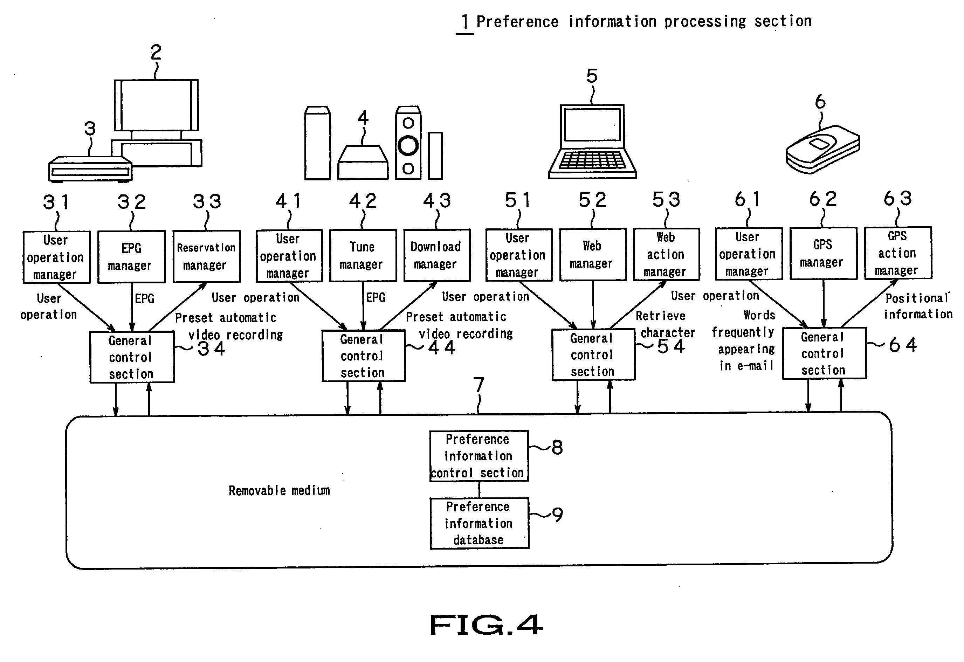

FIG. 4 is a schematic functional block diagram of a preference information processing system according to an embodiment of the present invention. Referring to FIG. 4, the preference information processing system 1 includes an HDD recording apparatus 3 connected to a terrestrial or satellite television broadcasting network and adapted to display a reproduced image on a monitor apparatus 2 that typically includes a liquid crystal display panel having a speaker, an audio recording apparatus 4 of the type connected to a network such as the Internet, a personal computer 5 adapted to be connected also to a network, a portable telephone set 6, a portable terminal apparatus (PDA) and the like. The HDD recording apparatus 3, the audio recording apparatus 4, the personal computer 5, the portable telephone set 6 and the like are specific examples of contents recording apparatus that operate as information processing apparatus according to the embodiment of the present invention.

In the preference information processing system 1, preference information acquired on the basis of user operations for contents in a plurality of information processing apparatus is shared on a common removable medium to be mounted in each of the information processing apparatus. In other words, the preference information processing system 1 has a feature that, unlike the known system illustrated in FIG. 1 as related art, a common preference information database 9 is stored in a removable medium 7 such as a flash memory along with a common preference information control section 8.

The information processing apparatus 3, 4, 5 and 6 of the plurality of different types respectively include as functional units user operation managing sections (managers) 31, 41, 51 and 61, attribute information managers 32, 42, 52 and 62, action managers 33, 43, 53 and 63, and general control sections 34, 44, 54 and 64 for controlling the managers and also communications with the removable medium 7.

The removable medium 7 contains a preference information database 9 and a preference information control section 8 that is a functional section for managing/editing preference information, which are shared by the information processing apparatus 3, 4, 5 and 6.

The preference information database 9 contained in the removable medium 7 is made to perform two database functions or a function as a contents-supplying-medium-dependent database for preference information specific to each of the information processing apparatus 3, 4, 5 and 6, and a function as a basic database for knowing the essence of the liking of the user regardless of the type of contents-supplying-medium by conforming to a contents-supplying-medium-dependent database format and a basic database format. These databases will be described in greater detail hereinafter.

The preference information control section (managing/editing functional section) 8 contained in the removable medium 7 communicates with the general control section of each of the information processing apparatus by means of commands including as an inquiry command, an answer command and a study information command, and updates the preference information database 9 according to the study information command.

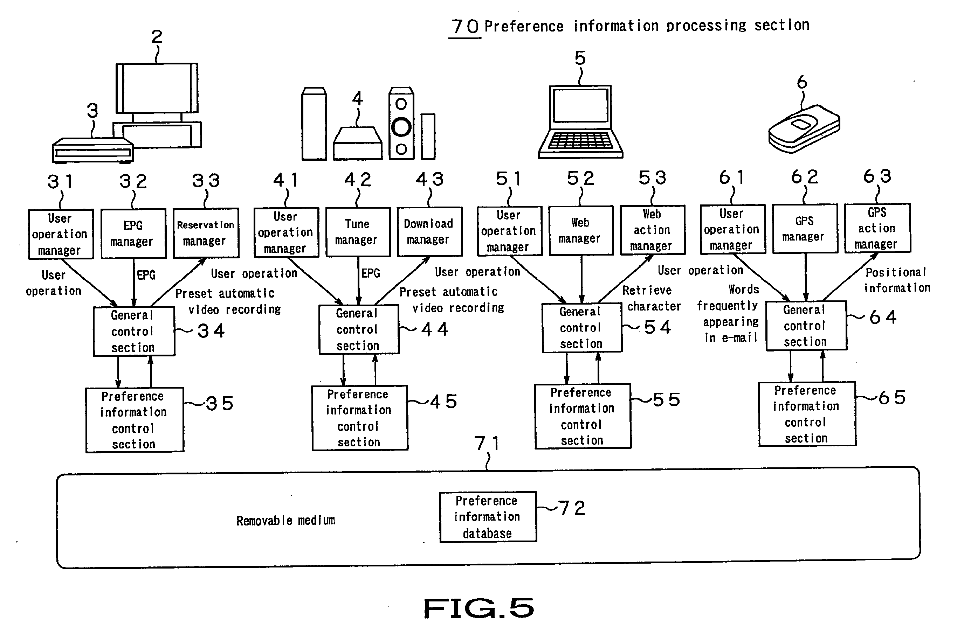

Meanwhile, a preference information processing system 70 as illustrated in FIG. 5 may have been conceivable as technically feasible system before the preference information processing system 1 of this embodiment was devised. The preference information processing system 70 illustrated in FIG. 5 is designed to contain a preference information database 72 having a common database format in a removable medium 71 such as a flash memory that is controlled by the preference information control sections 35, 45, 55 and 65 of a plurality of information processing apparatus.

However, while the database format is shared in the preference information processing system 70 illustrated in FIG. 5, the preference information control sections 35, 45, 55 and 65 of the information processing apparatus 3, 4, 5 and 6 are different from each other. In other words, if any of the apparatus rewrites the database in a manner that contradicts the common format of the database, the preference information control sections of all the other apparatus can no longer access the database.

In view of this problem, a common preference information database 9 is stored in the inside of the removable medium 7, which may typically be a flash memory, along with a common preference information control section 8 in the preference information processing system 1 of this embodiment.

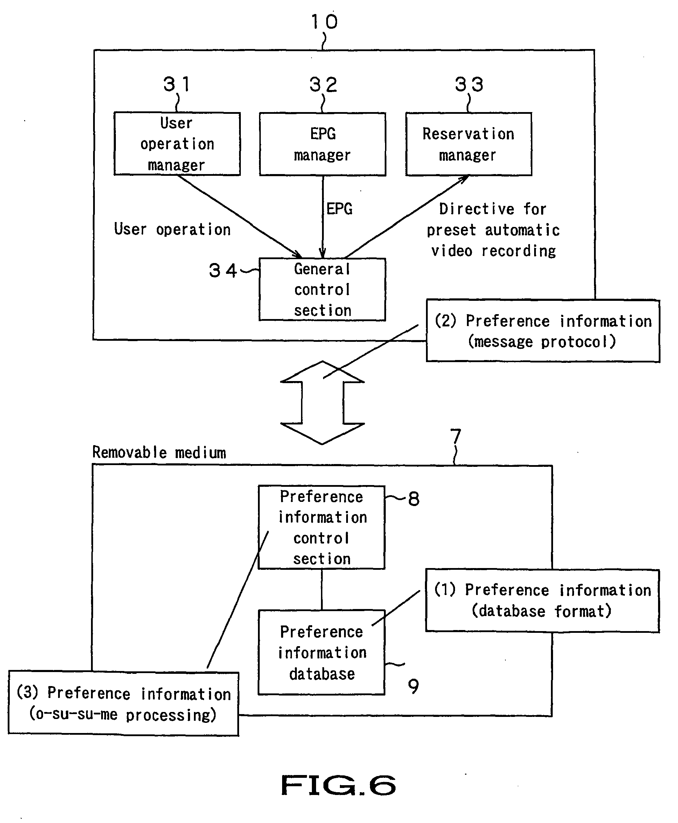

FIG. 6 is a schematic illustration of the function of the internal configuration of an information processing apparatus (e.g., HDD recording apparatus 3) of the preference information processing system 1. In FIG. 6, the part to be processed by a CPU and the part to be processed in the common removable medium 7 are separately shown for the purpose of easy understanding of the configuration of hardware.

The user operation manager 31 manages user operations performed at the operation panel or the remote control unit of the information processing apparatus and sends information on user operations relating to liking for programs to the general control section 34.

The EPG manager 32 is shown in FIG. 6 as a specific example of attribute information manager, which is described above. The EPG manager 32 takes out the EPG delivered periodically from a specific broadcasting station by way of an electric wave from the electric wave and sends it to the general control section 34. Specific examples for the other attribute information managers shown in FIG. 5 are the music tune manager 42, the web manager 52 and GPS manager 62. The music tune manager 42 manages the music tune information that the audio recording apparatus 4 acquires from a predetermined server by way of the Internet. The web manager 52 manages the web information on shopping that the personal computer 5 acquires from a predetermined server by way of the Internet. The GPS manager 62 manages the positional information that the portable telephone set 6 acquires by way of a GPS.

The general control section 34 generates a message on preference values relating to the EPG for which user operations are performed, using the user operation information sent from the user operation manager 31 and the EPG information sent from the EPG manager 32 and sends the message to the preference information control section 8.

The preference information control section 8 prepares two kinds of preference information including preference values of the elements relating to liking (title keywords, keywords, genres, broadcasting time zones) typically contained in the EPG information according to the message relating to preference values generated by the general control section 34, referring to the preference information database 9 made to perform two database functions.

The general control section 34 causes the action manager to take actions for presetting for automatic video recording of programs to be broadcast in the future according to the preference information prepared by the preference information control section 8 and the EPG information on programs to be broadcast in the future. As for the other information processing apparatus 4, 5 and 6, the general control sections thereof causes the respective action managers to take actions typically for downloading music tunes, retrieving shopping information and retrieving positional information.

The action manager 33 actually presets the HDD contained in the information processing apparatus 3 for automatic video recording under the control of the general control section 34. In other words, it manages automatic video recording operations under the control of the general control section 34. For this reason, it is also named as reservation manager 33 in FIG. 6. In the other information processing apparatus 4, 5 and 6, the action managers 43, 53 and 63 are respectively named as download manager 43, web action manager 53 and GPS action manager 63. The download manager 43 operates as managing section for downloading music data from a predetermined server by way of the Internet. The web action manager 53 operates as managing section for downloading shopping information and so on from a predetermined server by way of the Internet. The GPS action manager 63 operates as managing section for actions of retrieving or obtaining positional information from the GPS.

The preference information database 9 is stored in the removable medium 7, which may be a flash memory, as a common preference information database along with the preference information control section 8, which is also common to the information processing apparatus.

The preference information stored in the preference information database 9 conforms to a predetermined database format. The database format will be described in greater detail hereinafter.

The format of message packets to be used to exchange preference information between the preference information control section 8 and the general control section 34 is predetermined. The format of message packets will also be described in greater detail hereinafter.

The operation of processing the preference information that the preference information control section 8 prepares and recommends to the general control section 34 will also be described in greater detail hereinafter.

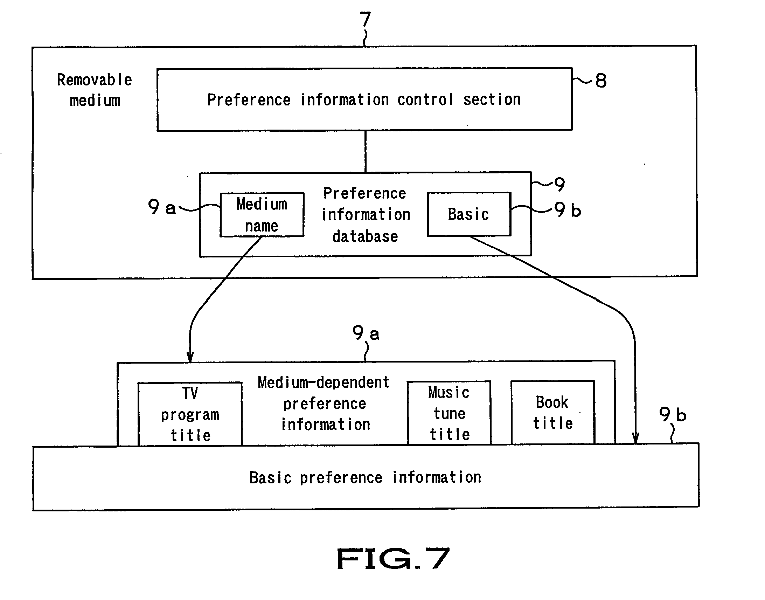

Firstly, the database format will be described below by referring to FIG. 7. Two database formats or a contents-supplying-medium-dependent database format 9a for specific preference information and a basic database format 9b for knowing the essence of the liking of the user regardless of the type of contents-supplying-medium are used in each of the information processing apparatus of the preference information processing system 1.

The contents-supplying-medium-dependent database format 9a is a format that is dependent on apparatus, appliance or contents-supplying-medium and adapted to handle preference information specific to a particular appliance. Preference information clearly showing the title of a set of contents such as "this TV program" is handled with the medium-dependent database format 9a.

The basic database format 9b is a format for knowing the essence of the liking of the user regardless of the type of contents-supplying-medium.

It is possible to pursue the essence of the liking of the user beyond apparatus only when preference information is recorded by means of the basic database format 9b. However, there may be occasions where it is desirable to record the title of a set of contents particularly when the user wants to "record this TV drama series every week". For this reason, medium-dependent preference information is also recorded by conforming to the medium-dependent database format 9a. Thus, it is possible for the preference information control section 8 to recommend sets of contents that are sorted well from a broad range of contents by using these two database formats.

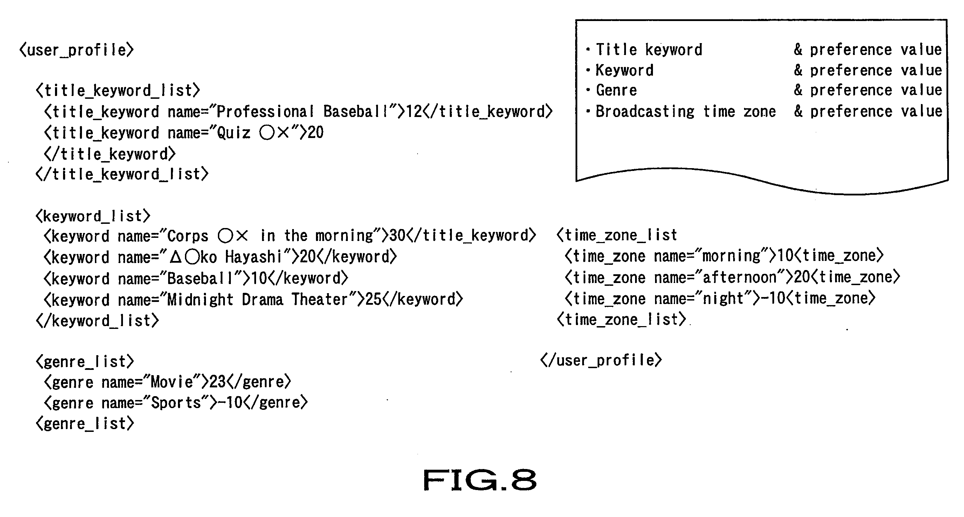

FIG. 8 is a schematic illustration of the data structure of medium-dependent preference information conforming to a medium-dependent database format. Keywords and preference values are recorded by means of the XML. For example, this database format may be applied to TV broadcasting systems. It will be appreciated that <title_keyword_list>, <keyword_list>, <genre_list> and <time_zone_list> are described in the column of <user_profile>.

In the column of <title_keyword_list>, "Professional Baseball Games" is described to read as <title_keyword name = "Professional Baseball Games"> 12 </title_keyword> with a preference value of "12". Similarly, "Quiz o×" is described to read as <title_keyword name = "Quiz ○×"> 20 </title_keyword> with a preference value of "20".

In the column of <keyword_list>, a keyword name of "Corps ○× in the morning" is described to read as <keyword name = "Corps ○× in the morning" > 30 </keyword> with a preference value of "30". Similarly, a keyword name of "△○ko Hayashi" is described to read as "<keyword name = "△○ko Hayashi" > 20 </keyword> with a preference value of "20". Likewise, a keyword name of "baseball" is described to read as <keyword name = "baseball" > 10 </keyword> with a preference value of "10". Additionally, a keyword name of "Midnight Drama Theater" is described to read as <keyword name = "Midnight Drama Theater" > 25 </keyword> with a preference value of "25".

In the column of <genre_list>, a genre name of "movie" is described to read as <genre name = "movie"> 23 </genre> with a preference value of "23". Similarly, a genre name of "sports" is described to read as <genre name = "sports"> -10 </genre> with a preference value of "-10".

In the column of <time_zone_list>, "morning" is described to read as < time_zone name = "morning"> 10 <time_zone" with a preference value of "10". Similarly, "afternoon" is described to read as < time_zone name = "afternoon"> 20 <time_zone> with a preference value of "20". Likewise, "night" is described to read as < time_zone name = "night"> -10 <time_zone> with a preference value of "-1 0".

The preference information control section 8 prepares a preference value in response to an inquiry from any of the general control sections 34, 44, 54 and 64 on the basis of the EPG information selected by a user operation by referring to the medium-dependent database 9a and adding the preference values of the lists.

As described above, the basic database 9b uses the database format that is a format for knowing the essence of the liking of the user regardless of the type of contents-supplying-medium. The simplest way of the use of the format may be recording keywords. Like the medium-dependent database 9a, the basic database 9b records keywords and preference values by means of the XML.

Now, the format of message packets for preference information to be exchanged between the preference information control section 8 and the general control sections 34, 44, 54 and 64 will be described below.

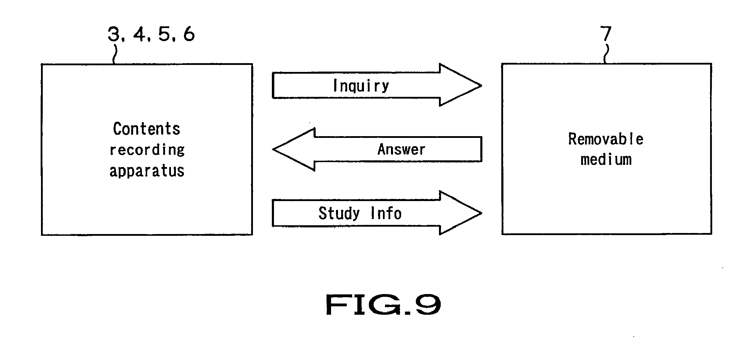

FIG. 9 is a schematic illustration of data packets of three different types that flows among the information processing apparatus (contents recording apparatus) 3, 4, 5, 6 and the removable medium 7. The removable medium 7 includes the preference information database 9 that uses two kinds of database formats (9a, 9b) as described above and the preference information control section 8. It stores preference information in it and also performs processing operations for sorting preference information in the medium itself. Data packets are handled by both the basic database 9b and the medium-dependent database 9a.

Inquiry packets are transmitted from the general control sections 34, 44, 54 and 64 of the information processing apparatus 3, 4, 5 and 6 to the removable medium 7 by way of the preference information control section 8. Inquiry packets are data packets to be used for sending a keyword (e.g., a TV program title) for which any of the information processing apparatus wants to know the preference value.

The preference information control section 8 of the removable medium 7 transmits answer packets to the information processing apparatus 3, 4, 5 and 6 respectively by way of the general control sections 34, 44, 54 and 64. An answer is a reply to an inquiry and contains preference values of two types, a medium-dependent preference value and a basic preference value.

The general control sections 34, 44, 54 and 64 of the information processing apparatus 3, 4, 5 and 6 transmit study info (user operation information) packets to the removable medium 7 by way of the preference information control section 8. Study info is used by the preference information control section 8 as material for altering one or more than one values in the preference value database.

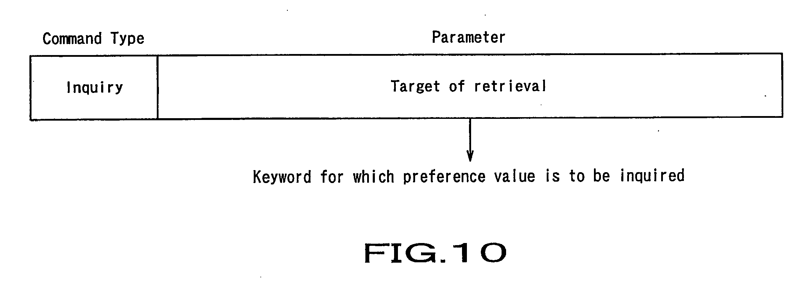

FIG. 10 is a schematic illustration of the format of inquiry packets of a message protocol. Inquiry is described as command type and the keyword for which the preference value is to be retrieved is described as parameter. The keyword may typically be a TV program title, a performer or a set of contents.

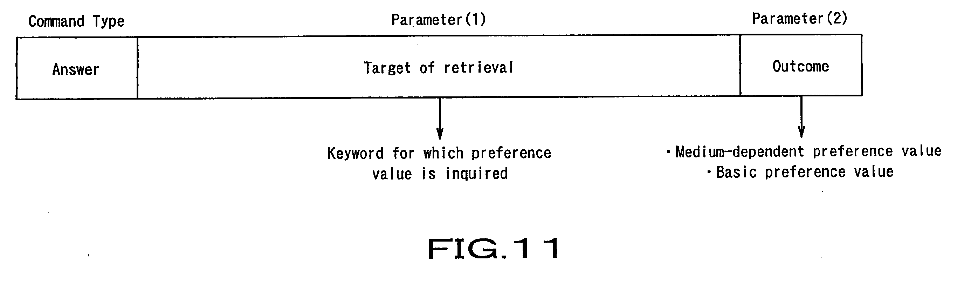

FIG. 11 is a schematic illustration of the format of answer packets of a message protocol. Answer is described as command type and the inquired keyword for which the preference value is to be retrieved is described as parameter (1). The keyword may typically be a TV program title, a performer or a set of contents. The outcome is described as parameter (2). Preference values of two types including a medium-dependent preference value and a basic preference value are described there.

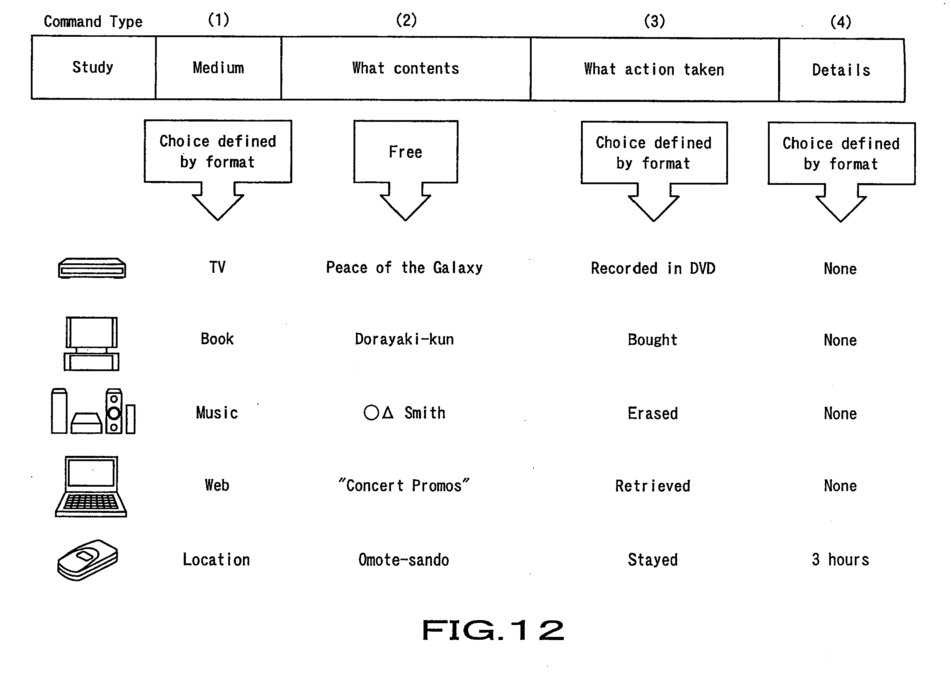

FIG. 12 is a schematic illustration of the format of study info packets of a message protocol. Study is described as command type and one or more than one medium names that define a choice by means of one or more than one formats are described as parameter (1). The medium names may typically include TV, book, music, web and location. One or more than one names indicating so many sets of contents will be freely described as parameter (2). Such names may include the titles of sets of contents such as "Peace of the Galaxy" and "Dorayaki-kun", the names of performers such as "○△ Smith", the titles of events such as "Concert Promos" and/or the names of locations such as "Omote-sando". How one or more than one actions are taken is described as parameter (3). How one or more than one actions are taken is defined by way of formats. For example, a choice including "recorded in a DVD", "bought", "erased", "retrieved" and/or "stayed" may be defined as actions that are taken. Details will be described as parameter (4). Details are defined by way of formats. "None" will be selected when there is no detail to be described. When "stayed" is described as parameter (3), "3 hours" may be selected and described as parameter (4) correspondingly.

Now, the processing operation of preparing a preference value by the preference information control section will be described below. As the preference information control section transmits the preference value to a corresponding information processing apparatus by way of the general control section thereof, it takes the roles as described below.

The first role is a role of sending a preference value as answer to an inquiry from an information processing apparatus (transmission of an answer packet). The second role is a role of interpreting the study information transmitted from an information processing apparatus and restructuring the preference information database by altering the preference value by means of the medium-dependent database format and the basic database format.

The first role of sending a preference value as answer to an inquiry from an information processing apparatus will be described in greater detail below. As pointed out above, the preference value to be transmitted as answer includes a medium-dependent preference value and a basic preference value.

The medium-dependent preference value is determined by means of the formula (1) shown below.

$$\text{Medium-dependent preference value}$$

$$= \Sigma \text{ (preference values of hit title keywords)}$$

$$+ \Sigma \text{ (preference values of hit keywords)}$$

$$+ \text{ genre preference value}$$

$$+ \text{ time zone preference value}$$

$$\dots (1)$$

The basic preference value is determined by means of the formula (2) shown below.

$$\text{Basic preference value} = \Sigma \text{ (preference values of hit title keywords)}$$

$$\dots (2)$$

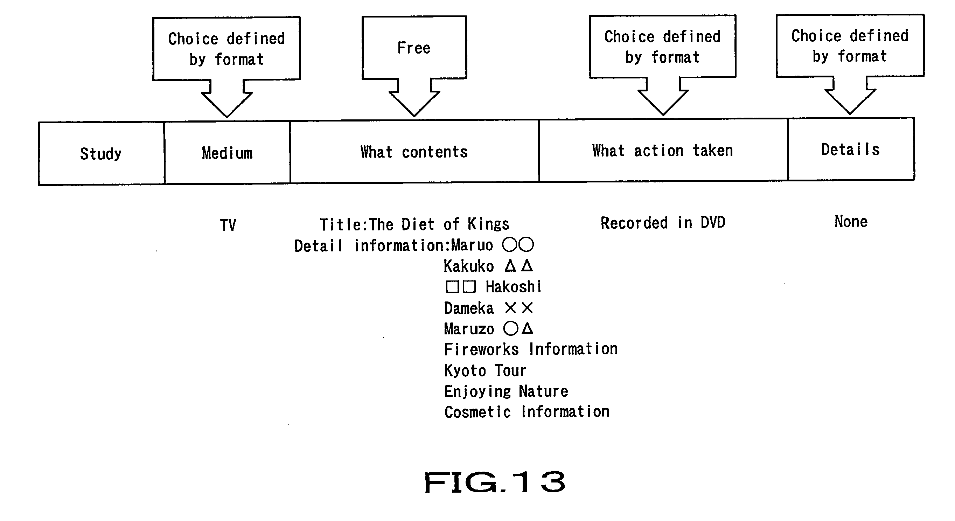

Now, the second role of interpreting the study information and restructuring the preference information database will be described in greater detail below. FIG. 13 is a schematic illustration of the method of altering a medium-dependent preference value. Referring to FIG. 13, when a study info packet is transmitted from any of the information processing apparatus 3, 4, 5 and 6 to the preference information control section 8 as shown in FIG. 13, the preference information control section adds +10 points if the list of the TV medium in the medium-dependent database 9a of the medium-dependent database format includes "The Diet of Kings" but adds it to the list and sets 10 points as initial points if the list does not include the "The Diet of Kings".

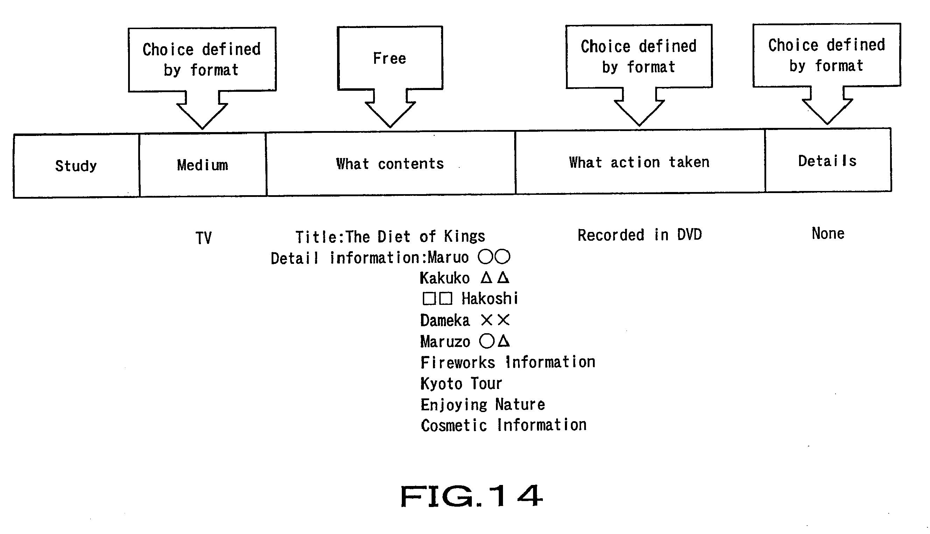

FIG. 14 is a schematic illustration of the method of altering a basic preference value. When a study info packet is transmitted from any of the information processing apparatus 3, 4, 5 and 6 to the preference information control section 8 as shown in FIG. 14, the preference information control section 8 adds +10 points to each of the keywords of "Maruo ○ ○", Kakuko △ △", "□ □ Hakoshi", "Dameka × ×", "Maruzo ○△", "Fireworks Information", "Kyoto Tour", "Enjoying Nature" and "Cosmetic Information" but adds the missing one or ones to the list.

In this way, the preference information control section 8 alters one or more than one of the medium-dependent preference values of the medium-dependent database format and/or one or more than one basic preference values of the basic database to restructure the databases.

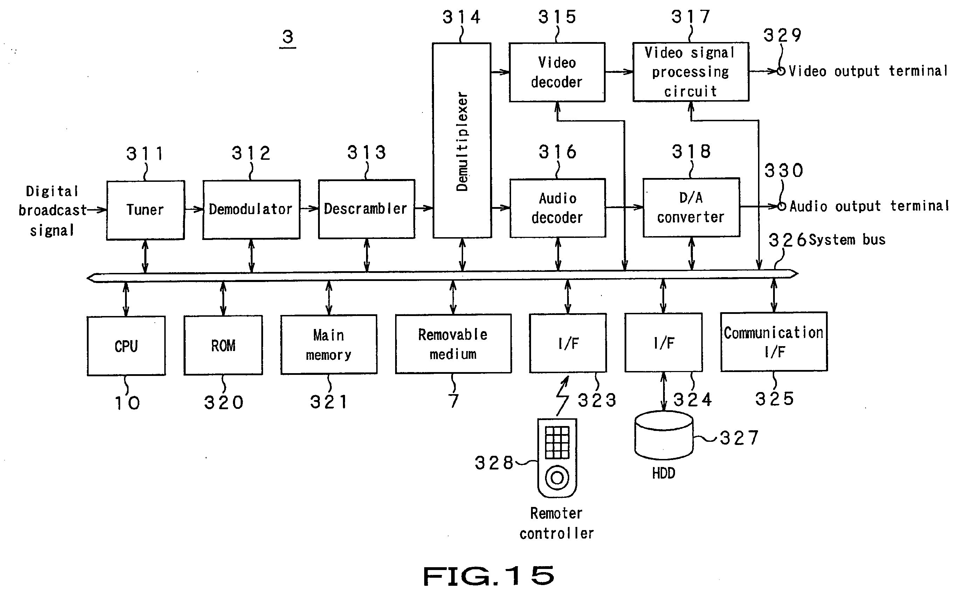

FIGS. 4, 6 and 7 illustrate the functional configurations of the information processing apparatus 3, 4, 5 and 6. Now, the hardware configuration of the information processing apparatus will be described below by way of the HDD recording apparatus 3. FIG. 15 is a schematic illustration of the hardware configuration of the HDD recording apparatus 3. In the HDD recording apparatus 3, a tuner 311, a demodulator 312, a descrambler 313 and a demultiplexer 314 are connected in series, while a video decoder 315, a video signal processing circuit 317, an audio decoder 316 and a D/A converter 318 are respectively connected in series to the demultiplexer 314.

The tuner 311 through the D/A converter 318, a CPU 10, a ROM 320, a main memory (RAM) 321, a removable medium 7, an interface 323 for a remote controller, an interface 324 for an HDD (hard disc drive) and a communication interface 325 for Internet connection are linked to each other by way of a system bus 326. An HDD (hard disc drive) 327 for recording TV programs is connected to the interface 324.

Remote controller 328 that belongs to the HDD recording apparatus 3 is provided with a power button, tuner buttons, a video recording preset button, an anti-erasure button for the recorded program, a presetting cancellation button, a replay button, directional keys and an enter key for selection on an EPG image and a keyword registration button.

When viewing a television program, a frequency band is selected by the tuner 311 from the digital broadcast signals input to the HDD recording apparatus 3 according to a tuning operation, using the remote controller 328, and the signals of the selected frequency band are demodulated by the demodulator 312 and descrambled by the descrambler 313 before they are separated into packets of video/audio data of programs of a plurality of channels and packets of EPG information by the demultiplexer 314.

Of the video/audio data of the packets of television programs of a plurality of channels, the video data and the audio data of a channel extracted according to the tuning operation, using the remote controller 328, are decoded respectively by the video decoder 315 and the audio decoder 316 by means of the MPEG-2Video and the MPEG-2Audio. The packets of EPG information are sent to the CPU 10.

The video signals decoded by the video decoder 315 and the video signals to be displayed as electronic program guide that are prepared by the CPU 10 by using the EPG information are converted into the NTSC format and subjected to mixing operations in the video signal processing circuit 317 so as to be output from the video output terminal 329 and sent to the display apparatus 2.

The audio signals decoded by the audio decoder 316 are converted into analog signals by the D/A converter 318 so as to be output from the audio output terminal 30 and sent to the display apparatus 2.

The CPU 10 controls the overall operation of the HDD recording apparatus 3 according to the programs and the data stored in the ROM 320, using the main memory 321 as working memory.

The processes that the CPU 10 executes include processes same as those in ordinary tuner-containing video cassette recorders (such as tuning processes, video recording processes according to preset video recordings), keyword registration processes and program retrieving processes according to registered keywords as well as presetting processes for automatic recording of programs (as reservation manager 33) as described earlier. The processes that the CPU 10 executes also include those of the EPG manager 32 and those of the user operation manager 31. In other words, the CPU 10 operates as the user operation manager 31, the EPG manager 32 and the reservation manager 32 as shown in FIG. 6. Additionally, the CPU 10 also operates as the general control section 34.

In the removable medium, the preference information control section 8 and the preference information database 9 function.

While the hardware configurations of the other information processing apparatus including the audio recording apparatus 4, the personal computer 5 and the portable telephone set 6 will not be described here in detail, they include a CPU 10, a ROM 320, a main memory 321, a removable medium 7, an HDD 327 and I/F 324 similar to those illustrated in FIG. 15. In other words, the CPU 10 takes the roles of the user operation manager, the attribute information manager, the action manager and the general control section described above by referring to FIGS. 4 and 6, while the removable medium 7 has the preference information control section 8 and the preference information database 9 as in the case of the HDD recording apparatus 3.

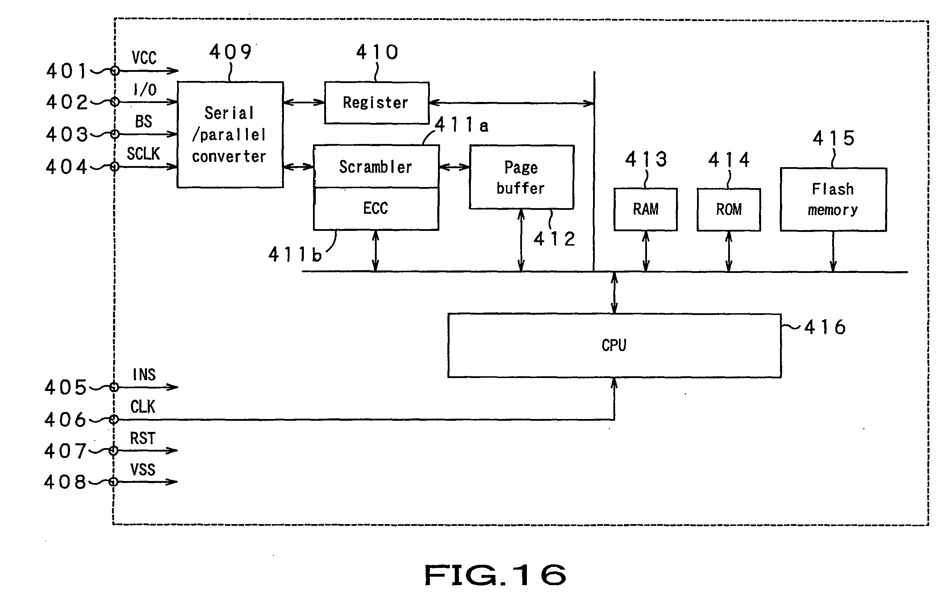

FIG. 16 is a schematic illustration of an exemplary removable medium that is a semiconductor memory, showing the configuration thereof. Referring to FIG. 16, the removable medium includes a power supply terminal 401, an input/output terminal 402 for bidirectional data signal line I/O, a bus state input terminal 403 of bus state, a transfer clock input terminal 404, a detection terminal 405 for plug-in/out detection, a clock input terminal 406, a reset input terminal 407 and a grounding terminal 408.

The power supply terminal 401 is used to externally supply operating power Vcc. The voltage of the operating power Vcc is between 5V and 3V.

The input/output terminal 402 is a data input/output terminal for actually inputting and outputting data by way of bidirectional data signal line I/O. The bidirectional data signal line I/O is similar to the bidirectional data signal line of SIM.

The bus state input terminal 403 is supplied with a bus state BS. A bus state BS shows the status of the bidirectional data signal line for the data to be transferred on the bidirectional data signal line with packet communication. For example, a processing operation is executed on the memory by changing the state by means of a TPC or data before accessing the data.

The use of an asynchronous mode that does not utilize any bus state BS is also possible for inputting/outputting data. This is the half-duplex asynchronous communication protocol of IS07816 being used for SIM.

A transfer serial clock SCLK is supplied to the transfer clock input terminal 404. With this transfer clock SLCK, the clock generation is controlled by the bus state BS in the condition of packet communication. The transfer clock SCLK is not used for the half-duplex asynchronous communication protocol.

The detection terminal 405 is used by an external apparatus to detect the plug-in/out condition of a smart stick. This detection terminal 405 is grounded in the inside of the smart stick and connected to the power source by way of a pull-up resistor by the external apparatus. Therefore, the detection terminal 405 falls to level "L" when a memory stick is mounted, whereas it rises to level "H" when a memory stick is not mounted.

An operation clock CLK is supplied to the clock input terminal 406. The operation clock is supplied to the CPU 416 in order to make the CPU 406 ready for operations.

A reset signal RST is supplied to the reset input terminal 407. The contained CPU 416 is initialized by the reset signal RST. Additionally, serial/parallel converter 409, control register 410, scrambler 411 a and other elements are also initialized by the reset signal RST. The grounding terminal 408 is connected to the ground Vss.

The serial/parallel converter 409 converts serial data into parallel data and vice versa for the purpose of exchanging data with an external apparatus. Serial data are transferred to and from the external apparatus by way of a bidirectional data communication line I/O but processing operations are performed internally by means of 8-bit parallel data. Thus, the serial/parallel converter 409 converts serial data into 8-bit parallel data and vice versa.

The register 410 includes a status register and a control register and is used by the CPU 416 to monitor and control the serial/parallel converter 409.

The scrambler 411 a is used to encrypt data and store encrypted data. Data are encrypted and stored in order to protect the stored data. If only the flash memory 415 can be taken out by some means or other, malicious persons may take out only the flash memory 415, read the contents of the flash memory 415 and steal the contents in the flash memory 415 including personal information. However, when data are encrypted before they are stored in the flash memory 415, the contents of the flash memory 415 including personal information can be protected if only the flash memory 415 is taken out and the contents are read.

The error detection code generating section 411 b typically adds error detection codes such as CRC (cyclic redundancy check) codes to the data to be transferred from it and to those transferred to it and detects errors in the data to be transferred from it and those transferred to it. The reliability of data is secured by such error detecting operations.

The page buffer 412 temporarily stores data by a predetermined volume. It is used to temporarily store data when the serial/parallel converter 409 and the flash memory 415 exchange data.

The RAM 413 is used to store the results of arithmetic operations that take place temporarily and parameters when the CPU 416 processes an instruction issued by an external apparatus.

The ROM 414 mainly stores the programs that the CPU 416 has to process. Processing instructions typically include an open instruction system necessary for manufacturing or utilizing portable terminals and a secret managing instruction system including a numerical password necessary for security purposes when operating the scramble key generating section and using the data that can be utilized only by the issuer and/or the manager. The security feature is enhanced by providing such a secret managing instruction system.

The ROM 414 also stores programs for operating files that are externally visible and those for operating hidden files that are not able to be accessed without using a managing instruction system to be used only for processes relating to management and encryption.

The flash memory 415 is realized by using a non-volatile memory card typically having NAND type memory cells. Both visible files and externally invisible files that relate to management are stored in the flash memory 415 according to the directory description and the file description.

The CPU 416 processes the instructions transferred from the external apparatus, reading out the necessary programs from the read only memory 414 whenever necessary.

The CPU 416 operates as the preference information control section 8 illustrated in FIGS. 4 and 6. The flash memory 415 operates as the preference information database 9 also illustrated in FIGS. 4 and 6.

As described above in detail, with the preference information processing system 1, the information processing apparatus belonging to the system can share the preference information of each of the apparatus. In other words, it is possible for the plurality of information processing apparatus to share the preference information they have by means of the removable medium. Then, as a result, each of the information processing apparatus can use information (preference information of the user) it has not hitherto been able to use so that it can recommend sets of contents that the user will surely prefer.

The preference information processing system 1 also provides an advantage of saving the cost of mounting a preference information control section in each of the information processing apparatus when it includes a removable medium.

Additionally, the user can save the effort necessary for inputting favorite keywords to all or most of the information processing apparatus. Still additionally, the user can suppress the risk that the all the preference information of the user flows to the unrelated information processing apparatus.

Meanwhile, not only memory cards and USB memories but also portable telephone sets can recently operate as removable medium. From the viewpoint of an information processing apparatus connected by way of a USB cable, it can use a portable telephone set that contains an HDD as removable medium. Similarly, from the viewpoint of an information processing apparatus connected by way of a USB cable, it can use a music player that contains an HDD or a flash memory as removable medium. In other words, such products are "fusion products" that can operate both as medium and appliance.

Such fusion products can be used as recording apparatus according to the embodiment of the present invention.

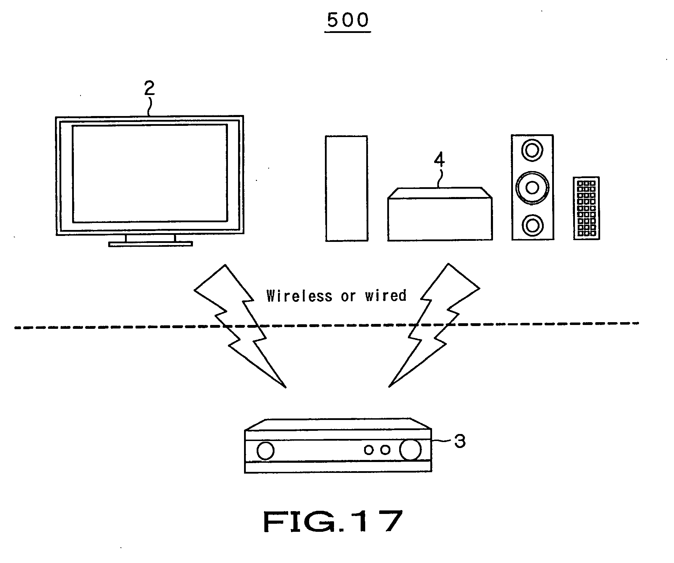

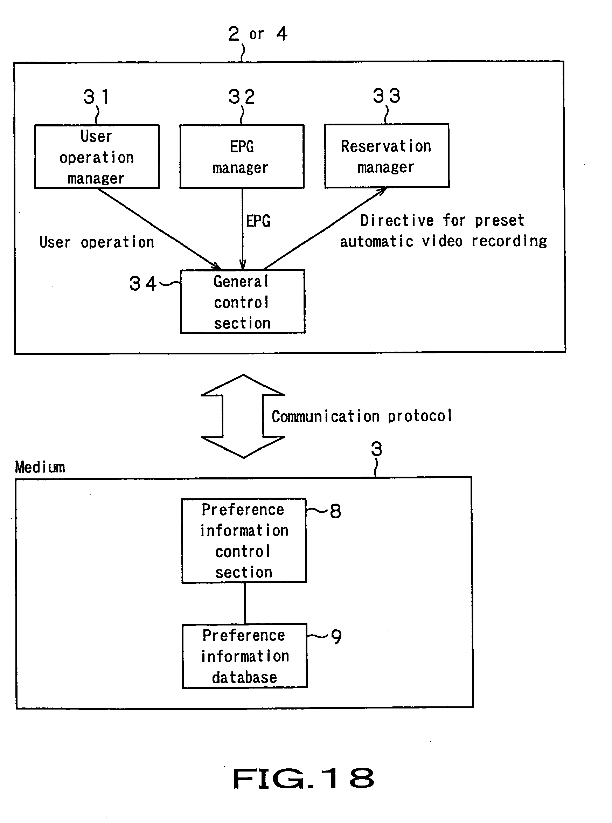

FIG. 17 illustrates a preference information processing system 500 according to another embodiment of the present invention. In the preference information processing system 500, an HDD recording apparatus 3 is used as recording apparatus according to the embodiment of the present invention and adapted to communicate with information processing apparatus including a television receiving set 2 and an audio recording apparatus 4 wirelessly or by way of wires. The television receiving set 2 has a user operation manager 31, an EPG manager 32, a reservation manager 33 and a general control section 34 as illustrated in FIG. 18.

On the other hand, the HDD recording apparatus 3 has a preference information control section 8 and a preference information database 9. In the above-described preference information processing system 500, the television receiving set 2 and the audio recording apparatus 4 that are host apparatus (information processing apparatus) communicate with the HDD recording apparatus 3 that operates as recording apparatus wirelessly or by way of wires according to a predetermined communication protocol.

It should be understood by those skilled in the art that various modifications, combinations, sub-combinations and alterations may occur depending on design requirements and other factors insofar as they are within the scope of the appended claims or the equivalents thereof.

**Claims**

1. A preference information processing system which has a plurality of information processing apparatus adapted to share preference information acquired on the basis of user operations for contents on a recording apparatus communicable with each of the information processing apparatus, wherein
   each of the plurality of information processing apparatus includes a user operation managing section that manages user operations for the contents, an attribute information managing section that manages attribute information of the contents, an action managing section that manages actions for the contents, and a general control section that controls the user operation managing section, the attribute information managing section and the action managing section, and communicates with the recording apparatus, and
   the recording apparatus contains a preference information database and a preference information control section that manages/edits preference information, which are shared by the plurality of information processing apparatus.

2. The system according to claim 1, wherein the preference information database uses two database formats or a contents-supplying-medium-dependent database format for preference information specific to each of the information processing apparatus, and a basic database format for knowing the essence of the liking of the user regardless of the type of contents-supplying-medium.

3. The system according to claim 1, wherein the preference information control section contained in the recording apparatus communicates with the general control section of each of the information processing apparatus, using an inquiry command, an answer command and a study information command, and updates the preference information database according to the study information command.

4. The system according to claim 1, wherein the general control section of each of the information processing apparatus communicates with the preference information control section of the recording apparatus, using an inquiry command, an answer command and a study information command, and controls the actions taken by each of the action managing sections for the contents according to the answer command from the preference information control section of the recording apparatus.

5. A recording apparatus communicable with a plurality of information processing apparatus and adapted to share preference information acquired on the basis of user operations for contents in the plurality of information processing apparatus, which contains a preference information database and a preference information control section that manages/edits preference information, which are shared by the plurality of information processing apparatus.

6. The apparatus according to claim 5, wherein the preference information database uses two database formats or a contents-supplying-medium-dependent database format for preference information specific to each of the information processing apparatus, and a basic database format for knowing the essence of the liking of the user regardless of the type of contents-supplying-medium.

7. The apparatus according to claim 5, wherein the preference information control section communicates with the general control section of each of the information processing apparatus, using an inquiry command, an answer command and a study information command, and updates the preference information database according to the study information command.

8. An information processing apparatus communicable with a recording apparatus containing a preference information control section for managing/editing preference information acquired on the basis of user operations for contents and a preference information database controlled by the preference information control section, which includes a user operation managing section that manages user operations for the contents, an attribute information managing section that manages attribute information of the contents, an action managing section that manages actions for the contents, and a general control section that controls the user operation managing section, the attribute information managing section and the action managing section, and communicates with the recording apparatus.

9. The apparatus according to claim 8, wherein the general control section communicates with the preference information control section of the recording apparatus, using an inquiry command, an answer command and a study information command, and controls the actions taken by the action managing section for the contents according to the answer command from the preference information control section of the recording apparatus.

10. A communication method to be used in a preference information processing system having a plurality of information processing apparatus adapted to share preference information acquired on the basis of user operations for contents on a recording apparatus communicable with each of the information processing apparatus, the method comprising:

an inquiry packet transmission step of transmitting a packet for inquiring about a preference value from each of the information processing apparatus to the recording apparatus; and
an answer packet transmission step of transmitting the preference value as the answer to the inquiry packet in the inquiry packet transmission step from the recording apparatus to the corresponding information processing apparatus.

11. The method according to claim 10, further comprising:

a step of transmitting information to be used for altering the preference value in the recording apparatus from each of the information processing apparatus to the recording apparatus.

12. The method according to claim 10, wherein a packet describing the keyword to be used for inquiring the preference value on the target of retrieval is transmitted in the inquiry packet transmission step.

13. The method according to claim 10, wherein a packet describing two kinds of preference values or a medium-dependent preference value and a basic preference value respectively conforming to two database formats or a contents-supplying-medium-dependent database format for specific preference information in each of the information processing apparatus and a basic database format for knowing the essence of the liking of the user regardless of the type of contents-supplying-medium is transmitted in response to the keyword for inquiring a preference value in the answer packet transmission step.

FIG. 1

EP 1 770 706 A2

FIG.2

90 Preference information processing section

FIG.3

FIG.4

EP 1 770 706 A2

FIG.5

EP 1 770 706 A2

10

31
User
operation
manager

32
EPG
manager

33
Reservation
manager

EPG

User operation

Directive for
preset automatic
video recording

34— General
control
section

(2) Preference information
(message protocol)

Removable medium

7

Preference
information
control
section

~8

(1) Preference information
(database format)

Preference
information
database

9

(3) Preference information
(o-su-su-me processing)

## FIG.6

EP 1 770 706 A2

7

| Removable medium | Preference information control section | ~8 |

9

9a — Medium name | Preference information database | Basic | — 9b

9a

Medium-dependent preference information

| TV program title | Music tune title | Book title |

9b

Basic preference information

# FIG.7

EP 1 770 706 A2

```
<user_profile>

  <title_keyword_list>
   <title_keyword name="Professional Baseball">12</title_keyword>
   <title_keyword name="Quiz ○×">20
   </title_keyword>
  </title_keyword_list>

  <keyword_list>
   <keyword name="Corps ○× in the morning">30</title_keyword>
   <keyword name="△○ko Hayashi">20</keyword>
   <keyword name="Baseball">10</keyword>
   <keyword name="Midnight Drama Theater">25</keyword>
  </keyword_list>

  <genre_list>
   <genre name="Movie">23</genre>
   <genre name="Sports">-10</genre>
  <genre_list>

  <time_zone_list
   <time_zone name="morning">10<time_zone>
   <time_zone name="afternoon">20<time_zone>
   <time_zone name="night">-10<time_zone>
  <time_zone_list>

</user_profile>
```

```
· Title keyword            & preference value
· Keyword                  & preference value
· Genre                    & preference value
· Broadcasting time zone   & preference value
```

# FIG.8

3, 4, 5, 6

7

| Contents recording apparatus | | Removable medium |

Inquiry →

← Answer

Study Info →

# FIG.9

| Command Type | Parameter |
|---|---|
| Inquiry | Target of retrieval |

Keyword for which preference value is to be inquired

# FIG.10

EP 1 770 706 A2

EP 1 770 706 A2

| Command Type | Parameter(1) | Parameter(2) |
|---|---|---|
| Answer | Target of retrieval | Outcome |

Keyword for which preference
value is inquired

· Medium-dependent preference value
· Basic preference value

# FIG.11

| Command Type | (1) | (2) | (3) | (4) |
| --- | --- | --- | --- | --- |
| Study | Medium | What contents | What action taken | Details |
| | Choice defined by format | Free | Choice defined by format | Choice defined by format |

| | Medium | What contents | What action taken | Details |
| --- | --- | --- | --- | --- |
| | TV | Peace of the Galaxy | Recorded in DVD | None |
| | Book | Dorayaki-kun | Bought | None |
| | Music | ○△ Smith | Erased | None |
| | Web | "Concert Promos" | Retrieved | None |
| | Location | Omote-sando | Stayed | 3 hours |

FIG.12

EP 1 770 706 A2

EP 1 770 706 A2

| | Choice defined by format | Free | Choice defined by format | Choice defined by format |
|---|---|---|---|---|

| Study | Medium | What contents | What action taken | Details |
|---|---|---|---|---|

TV

Title:The Diet of Kings
Detail information:Maruo ○○
　　　　　　Kakuko △△
　　　　　　□□ Hakoshi
　　　　　　Dameka ××
　　　　　　Maruzo ○△
　　　　　　Fireworks Information
　　　　　　Kyoto Tour
　　　　　　Enjoying Nature
　　　　　　Cosmetic Information

Recorded in DVD

None

# FIG.13

| Study | Medium | What contents | What action taken | Details |
|---|---|---|---|---|
| | Choice defined by format | Free | Choice defined by format | Choice defined by format |
| | TV | Title:The Diet of Kings<br>Detail information:Maruo ○○<br>Kakuko △△<br>□□ Hakoshi<br>Dameka ××<br>Maruzo ○△<br>Fireworks Information<br>Kyoto Tour<br>Enjoying Nature<br>Cosmetic Information | Recorded in DVD | None |

<div align="center">

# FIG.14

</div>

EP 1 770 706 A2

EP 1 770 706 A2

3

314 315 317 329

| Demultiplexer | Video decoder | Video signal processing circuit | → Video output terminal |

311 312 313 316 318 330

Digital broadcast signal → | Tuner | → | Demodulator | → | Descrambler | | Audio decoder | → | D/A converter | → Audio output terminal

326 System bus

CPU | ROM | Main memory | Removable medium | I/F | I/F | Communication I/F

10 320 321 7 323 324 325

327

328 — Remote controller

HDD

**FIG.15**

FIG.16

EP 1 770 706 A2

<u>500</u>

FIG.17

2 or 4

| 31 | 32 | 33 |
|----|----|----|
| User operation manager | EPG manager | Reservation manager |

User operation

EPG

Directive for preset automatic video recording

34 — General control section

Communication protocol

Medium

3

Preference information control section — 8

Preference information database — 9

# FIG.18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005282996 A
- WO 01043429 A

- JP 2004072502 A